# EUROPEAN PATENT SPECIFICATION

(11) **EP 4 276 717 B1**
(45) Date of publication and mention of the grant of the patent: **08.04.2026**
(21) Application number: 23157853.5
(22) Date of filing: 21.02.2023
(51) Int. Cl.: G06Q 10/0631, G06Q 50/02, B64C 39/02

(54) **INFORMATION PROCESSING APPARATUS, ENERGY SYSTEM, AND BATTERY OPERATION PLAN CREATION METHOD**
INFORMATIONSVERARBEITUNGSVORRICHTUNG, ENERGIESYSTEM UND VERFAHREN ZUR ERSTELLUNG EINES BATTERIEBETRIEBSPLANS
APPAREIL DE TRAITEMENT D'INFORMATIONS, SYSTÈME D'ÉNERGIE ET PROCÉDÉ DE CRÉATION DE PLAN DE FONCTIONNEMENT DE BATTERIE

(30) Priority: 11.05.2022 JP 2022078380
(43) Date of publication of application: 15.11.2023
(73) Proprietor: Hitachi, Ltd., Tokyo 100-8280 (JP)
(72) Inventor: KRASIENAPIBAL, Thantip Sirinabhigupta, 100-8280 Tokyo (JP); OKAMOTO, Mamoru, 100-8280 Tokyo (JP); TAKEMOTO, Takashi, 100-8280 Tokyo (JP); UCHIGAITO, Hiroshi, 100-8280 Tokyo (JP)
(74) Representative: Mewburn Ellis LLP

(56) References cited:
- WO-A1-2015/001930
- CN-A- 109 858 794
- JP-A- 2021 044 972
- US-A1- 2014 303 814
- US-A1- 2015 039 391
- UCHIGAITO HIROSHI ET AL: "Multi-objective Spatiotemporal Optimization of Transportation and Power Management by using Multiple Electric Vehicles in Nanogrid Networks", 2021 IEEE ELECTRICAL POWER AND ENERGY CONFERENCE (EPEC), IEEE, 22 October 2021 (2021-10-22), pages 1 - 8, XP034035636, DOI: 10.1109/EPEC52095.2021.9621698

## Description

### Technical Field

The present disclosure relates to an information processing apparatus, an energy system, and a battery operation plan creation method.

### Background Art

In recent years, as a new energy system, development of an energy system with a nano-grid as a base unit that includes small-scale renewable energy sources, which utilizes sunlight or the like, is being promoted. The energy system is a self-sustaining energy system (for example, see Patent Literature 1) that is independent of an existing energy system such as a large-scale electrical power plant, and is expected as an electric power source for a regional industry (agriculture) and an emergency power source during a disaster.

Patent Literature 2 proposes an energy management system that generates a system charge/discharge plan including a charge plan of chargers which can charge a storage battery provided on a vehicle and a charge/discharge plan of a storage battery which can store power generated by a photovoltaic facility and can supply discharged power to the chargers.

Patent Literature 3 proposes a system according to the present invention comprising: an electric vehicle equipped with a replaceable battery; a battery station capable of charging a battery; and a management server for managing the entire system.

Uchigaito Hiroshi et al proposes a distributed energy system in which multiple small grids are installed in a distributed manner in an area, and multiple electric vehicles located in the area are used as mobile batteries for power leveling between grids and used as regional transportation (Uchigaito Hiroshi et al, 2021, Multi-objective Spatiotemporal Optimization of Transportation and Power Management by using Multiple Electric Vehicles in Nanogrid Networks, IEEE Electrical Power and Energy Conference (EPEC), pp. 365-372).

Patent Literature 4 proposes methods and systems for predicting demand for battery services in an electric vehicle network.

### Citation List

### Patent Literature

Patent Literature 1: JP 2021-528752 A
Patent Literature 2: JP 2021-044972 A
Patent Literature 3: WO 2015/001930 A1
Patent Literature 4: US 2015/039391 A1

### Summary of Invention

### Technical Problem

To assist a regional industry (agriculture), in a region where nano-grids are arranged, it is being considered to charge batteries for agricultural drones with nano-grid power generation and power storage facilities, and deliver large amounts of batteries to each farmland from this charging base.

However, in preparation for extension of farm work time due to bad weather or the like and charging using renewable energy where electric power supply is unstable, it was necessary to prepare an excess battery compared with a work plan of a scheduled work, which increased cost by that amount.

To assist the regional industry (agriculture) using a small-scale self-sustaining energy system, an efficient battery operation plan must be created while considering uncertainties of a farm work time or the like caused by weather fluctuation.

Therefore, the present disclosure provides an information processing apparatus, an energy system, and a battery operation plan creation method that allow creating an efficient battery operation plan while considering uncertainties of a farm work time or the like caused by weather fluctuation.

### Solution to Problem

In a first aspect of the present invention, there is provided an information processing apparatus according to claim 1.

In a second aspect of the present invention, there is provided an energy system according to claim 9.

In a third aspect of the present invention, there is provided a battery operation plan creation method according to claim 10.

### Advantageous Effects of Invention

With the present disclosure, the efficient battery operation plan can be created while considering uncertainties of a farm work time or the like caused by weather fluctuation.

### Brief Description of Drawings

Fig. 1 is a diagram illustrating an entire configuration of an energy system of Embodiment 1.
Fig. 2 is a hardware block diagram of a battery operation plan creation system of Embodiment 1.
Fig. 3 is a block diagram illustrating a configuration of a CPU of Embodiment 1.
Fig. 4 is a flowchart illustrating an entire configuration of processes executed by the battery operation plan creation system of Embodiment 1.
Fig. 5 is a flowchart illustrating a battery operation plan creation method of Embodiment 1.
Fig. 6 is a flowchart illustrating a search calculation of a battery charge destination of Embodiment 1.
Fig. 7 include diagrams illustrating details of integrated work plans of Embodiment 1.
Fig. 8 is a diagram illustrating a detail of farmland weather information of Embodiment 1.
Fig. 9A is a diagram illustrating a detail of nano-grid information of Embodiment 1.
Fig. 9B is a diagram illustrating a detail of nano-grid weather information of Embodiment 1.
Fig. 10 is a diagram illustrating integrated information of Embodiment 1.
Fig. 11 is a diagram illustrating a screen for inputting farmland information of Embodiment 1.
Fig. 12 is a diagram illustrating a screen for inputting a temporary work plan of Embodiment 1.
Fig. 13 is a diagram illustrating a list screen of a work plan of Embodiment 1.
Fig. 14 is a diagram illustrating battery information of Embodiment 1.
Fig. 15 is a diagram illustrating a battery operation plan of Embodiment 1.
Fig. 16A is a diagram illustrating a battery delivery plan of Embodiment 1.
Fig. 16B is a diagram illustrating a delivery map of Embodiment 1.
Fig. 17 includes a diagram illustrating an initial battery operation plan of Embodiment 1, a diagram illustrating an updated battery operation plan of Embodiment 1, and a diagram illustrating a battery delivery plan of Embodiment 1.
Fig. 18 includes diagrams illustrating battery operation plans of Embodiment 2, and a diagrams illustrating a battery delivery plan of Embodiment 2.
Fig. 19 includes diagrams illustrating battery operation plans of Embodiment 2, and diagrams illustrating battery delivery plans of Embodiment 2.
Fig. 20 includes a diagram illustrating a battery operation plan of Embodiment 2, and a diagram illustrating a battery delivery plan of Embodiment 2.

### Description of Embodiments

Embodiments of this disclosure will be described in detail based on the drawings. In the following Embodiments, it goes without saying that components (including element steps and the like) of the Embodiments are not necessarily indispensable except in cases where it is clearly stated, it is clearly indispensable in principle, and the like.

### <Embodiment 1>

### (Energy System 100)

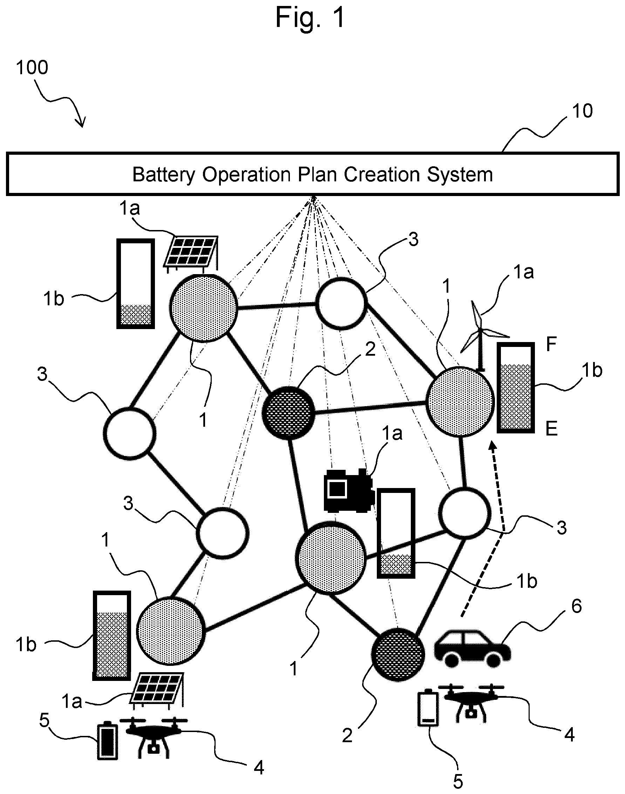

Fig. 1 is a diagram illustrating an entire configuration of an energy system of Embodiment 1. The energy system 100 includes a plurality of nano-grids 1, a plurality of farmlands 2, a plurality of relay points 3, a plurality of drones 4, a plurality of batteries 5, a transportation vehicle 6, and a battery operation plan creation system 10 that is communicatively connected to the nano-grids 1, the farmlands 2, and the like. The energy system 100 of Embodiment 1 is a self-sustaining energy system that does not depend on an existing energy system of a large-scale electrical power plant and the like.

The nano-grid 1 has a power generation facility 1a that performs a photovoltaic power generation, a solar thermal power generation, a hydroelectric power generation, a wind power generation, a geothermal power generation, a wave activated power generation, a temperature difference power generation, a biomass power generation, and the like, and an electricity storage facility 1b that stores electric power generated by the power generation facility 1a. The plurality of nano-grids 1 are small-scale power generation and electricity storage facilities and scattered in respective locations. In this nano-grid 1, a battery 5 mounted on a drone 4 is charged using the electric power generated by the power generation facility 1a or the electric power stored in the electricity storage facility 1b.

The charged battery 5 is delivered through the relay point 3 or directly to the farmland 2 from the nano-grid 1 by the transportation vehicle 6. The battery 5 delivered to the farmland 2 is mounted onto the drone 4, and the drone 4 sprays agricultural chemicals on the farmland 2 and monitors the farmland. A demand area where work requiring the battery 5 is performed is not limited to the farmland 2, and may be a factory, a forest, the sea, or the like.

A used battery 5 used in the farmland 2 is delivered through the relay point 3 or directly to the nano-grid 1 from the farmland 2 by the transportation vehicle 6. The battery 5 delivered to the nano-grid 1 is charged using the electric power generated by the power generation facility 1a or the electric power stored in the electricity storage facility 1b. The transportation vehicle 6 may be any of electric vehicles, engine vehicles, and hybrid vehicles.

### (Battery Operation Plan Creation System 10)

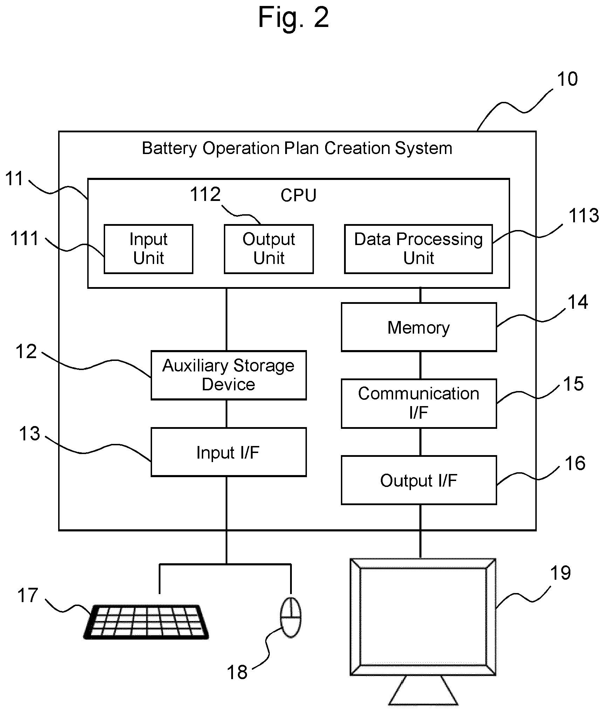

FIG. 2 is a hardware block diagram of the battery operation plan creation system of Embodiment 1. The battery operation plan creation system 10 is an information processing apparatus, for example, a personal computer or a server including a CPU 11 and a memory 14. The battery operation plan creation system 10 may be a cloud server. To the battery operation plan creation system 10, a keyboard 17 and a computer mouse 18 are connected as an input device, and a display unit 19 is connected as an output device.

The battery operation plan creation system 10 includes the Central Processing Unit (CPU) 11, an auxiliary storage device 12, an input I/F 13, the memory 14, a communication I/F 15, and an output I/F 16. I/F is abbreviation of an interface. The CPU 11 is a central processing unit. The CPU 11 may be a Digital Signal Processor (DSP), an Application Specific Integrated Circuit (ASIC), or the like. The CPU 11 deploys a program stored in the auxiliary storage device 12 into a work area of the memory 14 to be executable and executes the program. The CPU 11 has an input unit 111, an output unit 112, and a data processing unit 113. The memory 14 temporarily stores the program that the CPU 11 executes, data that the processor processes, and the like. The memory 14 is, for example, a flash memory, a Random Access Memory (RAM), and the like. The auxiliary storage device 12 is, for example, a solid state drive device (SSD), a hard disk drive device (HDD), and the like.

The above-described keyboard 17 and computer mouse 18 are connected to the input I/F 13. The above-described display unit 19 is connected to the output I/F 16. The communication I/F 15 is an interface to communicate with external devices (a computer of the nano-grid 1, a computer of the farmland 2, and the like) via a network by wired communication or wireless communication.

### (Configuration of CPU 11)

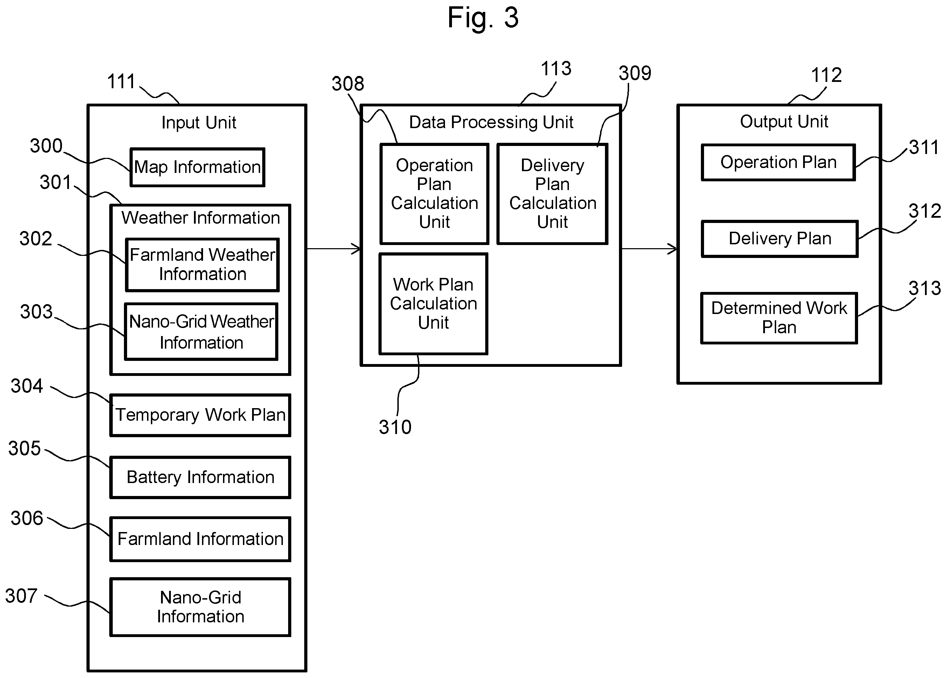

Fig. 3 is a block diagram illustrating a configuration of the CPU of Embodiment 1. The CPU 11 has an input unit (input means) 111 where various kinds of data are input, a data processing unit (processing means) 113 that processes the various kinds of data input to the input unit 111, and an output unit (output means) 112 that outputs data processed by the data processing unit 113.

To the input unit 111, map information 300, weather information 301, a temporary work plan 304, battery information 305, farmland information 306, and nano-grid information 307 are input. The weather information 301 includes farmland weather information (demand area weather information) 302 including weather information of the farmland 2 and nano-grid weather information 303 including weather information at installation location of the nano-grid 1. The temporary work plan 304 is information collected from each farmland 2 and includes a work demand (electric power [W] or a required number of batteries) of the battery 5 required for the work in the farmland 2. The battery information 305 is information on a plurality of batteries 5 and, for example, includes information such as an ID of the battery 5, the location of the battery 5, a remaining amount (power storage amount) of the battery 5. The farmland information 306 includes information that indicates an ID of the farmland 2, the location (latitude, longitude) of the farmland 2, a size of the farmland 2, and the like. The nano-grid information 307 includes information that indicates an ID of the nano-grid 1, the location (latitude, longitude) of the nano-grid 1, a maximum power storage amount of the nano-grid 1, and a power generation capacity of the nano-grid 1.

The data processing unit 113 includes an operation plan calculation unit 308 calculating an operation plan for the battery 5, a delivery plan calculation unit 309 calculating a delivery plan of the battery 5, a work plan calculation unit 310 correcting or determining the temporary work plan 304 of each farmland 2. The operation plan calculation unit 308 creates an operation plan 311 of the plurality of batteries 5 based on the temporary work plan 304 and the farmland weather information 302 input from the input unit 111. The delivery plan calculation unit 309 creates a delivery plan 312 of the battery 5 in accordance with the created operation plan 311 of the battery 5. The work plan calculation unit 310 corrects or determines the temporary work plan 304 of each farmland 2 in accordance with the created operation plan 311 of the battery 5.

The output unit 112 outputs the operation plan 311 of the battery 5 calculated by the operation plan calculation unit 308, the delivery plan 312 of the battery 5 calculated by delivery plan calculation unit 309, and a determined work plan 313 corrected or determined by the work plan calculation unit 310. The operation plan 311 and the delivery plan 312, which are output, are displayed on the display unit 19. The determined work plan 313, which is output, is transmitted to each farmland 2.

### (Process Flow of Battery Operation Plan Creation System 10)

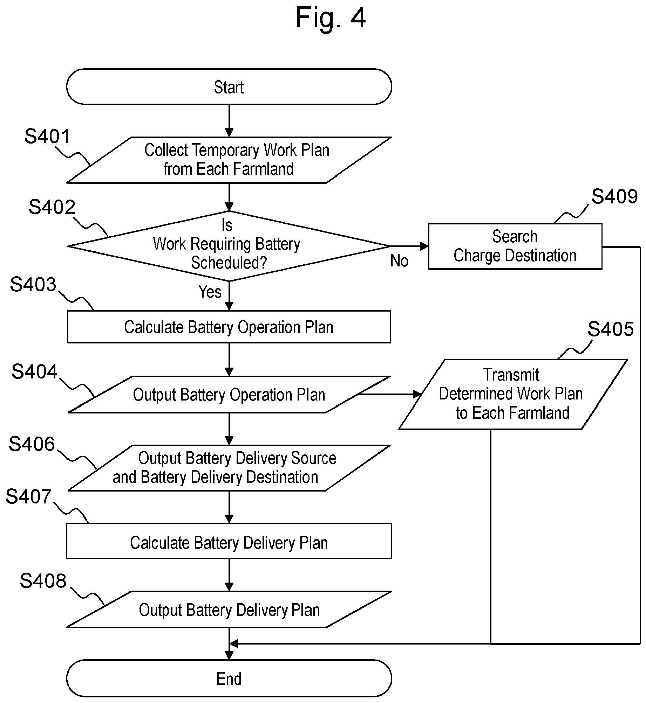

Fig. 4 is a flowchart illustrating an entire configuration of processes executed by the battery operation plan creation system of Embodiment 1. With reference to Fig. 4, the processes executed by the battery operation plan creation system 10 will be described. Each step in the flowchart of Fig. 4 is executed by the CPU 11 that deploys the program read out from the auxiliary storage device 12 into the memory 14 and executes the program.

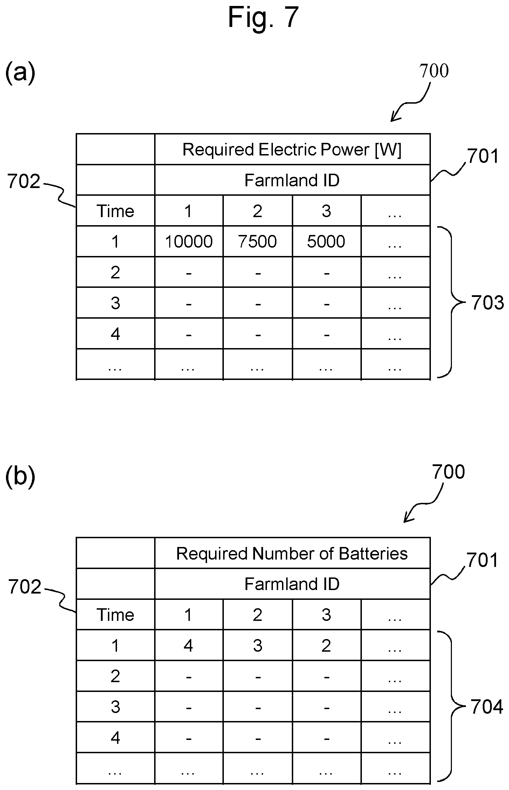

In each farmland 2, to perform the work requiring the battery 5, the temporary work plan 304 including the required electric power [W] or the required number of batteries is input for each time. The battery operation plan creation system 10 collects the temporary work plans 304 from each farmland 2 via the network (Step S401). Then, the battery operation plan creation system 10 merges the temporary work plans 304 collected from each farmland 2 to create integrated work plans 700 (see Fig. 7).

The battery operation plan creation system 10 refers to the integrated work plans 700 to determine whether or not any work requiring the battery 5 is scheduled in any of the farmlands 2 (Step S402).

When it is determined that a work requiring the battery 5 is scheduled in any of the farmlands 2 (Yes at Step S402), the battery operation plan creation system 10 calculates the operation plan 311 for the battery 5 that allocates the required number of batteries 5 to each farmland 2 (Step S403). Specifically, the battery operation plan creation system 10 calculates the operation plan 311 for the battery 5 based on the integrated work plans 700 and farmland weather information 302.

Then, the battery operation plan creation system 10 outputs the calculated operation plan 311 for the battery 5 (Step S404). Subsequently, the battery operation plan creation system 10 determines or corrects the temporary work plan 304 for each farmland 2, and transmit the determined work plan 313 to each farmland 2 based on the output operation plan 311 for the battery 5 (Step S405).

Next, the battery operation plan creation system 10 outputs a delivery source (nano-grid 1 or farmland 2) and a delivery destination (farmland 2 or nano-grid 1) of each battery 5 based on the operation plan 311 for the battery 5 (Step S406).

Then, the battery operation plan creation system 10 calculates the delivery plan 312 for the battery 5 based on the output delivery source and delivery destination of the battery 5 and the map information 300 (Step S407). Subsequently, the battery operation plan creation system 10 outputs the calculated delivery plan 312 for the battery 5 (Step S408).

At Step S402, when it is determined that a work requiring the battery 5 is not scheduled in any of the farmlands 2 (No at Step S402), the battery operation plan creation system 10 searches a charge destination for an unworkable battery 5 (Step S409). Specifically, the battery operation plan creation system 10 searches the charge destination for the unworkable battery 5 based on the nano-grid weather information 303 and the nano-grid information 307 regarding the nano-grid 1.

### (Operation Plan Creation Method for Battery 5)

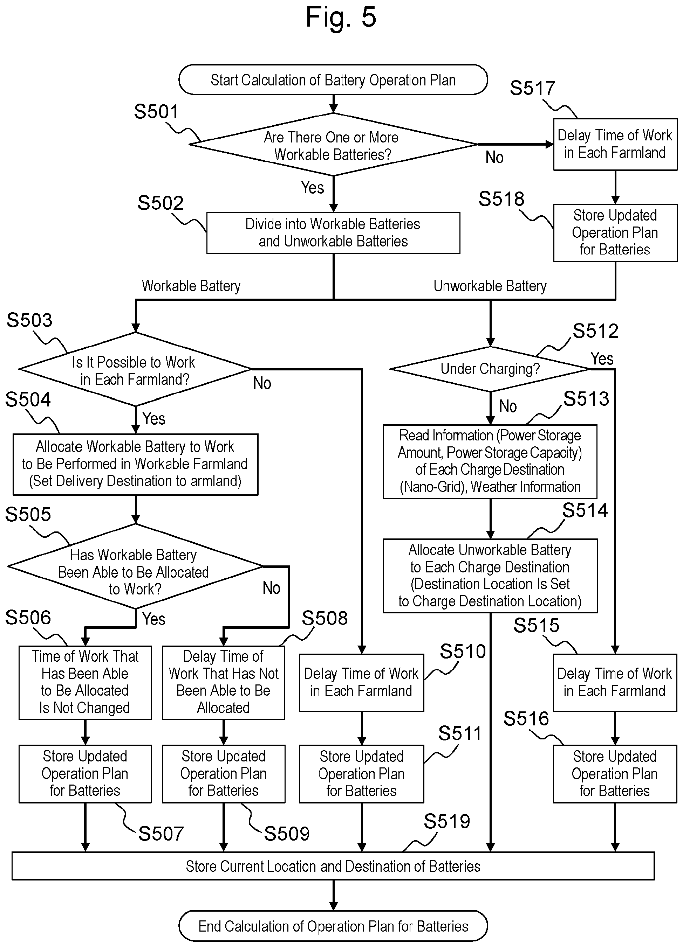

Fig. 5 is a flowchart illustrating the battery operation plan creation method of Embodiment 1. With reference to Fig. 5, the creation method of the operation plan 311 for the battery 5 will be described. The flowchart in Fig. 5 is a flowchart illustrating a detail of Step S403 in Fig. 4.

First, the battery operation plan creation system 10 determines whether or not there are one or more workable batteries 5 (Step S501). The workable battery 5 is, for example, a fully charged battery 5 or a battery having a remaining amount of power storage amount equal to or more than a threshold value.

When it is determined that there are one or more workable batteries 5 (Yes at Step S501), the battery operation plan creation system 10 divides the plurality of batteries 5 into the workable batteries 5 and the unworkable batteries 5 (Step S502). Then, the battery operation plan creation system 10 creates an operation plan for the workable batteries 5 and an operation plan for the unworkable batteries 5, respectively.

Regarding the workable batteries 5, the battery operation plan creation system 10 determines whether or not it is possible to work in each farmland 2 based on the weather information (farmland weather information 302) of each farmland 2 (Step S503). The farmland weather information 302 includes information on weather, ambient temperature, precipitation probability, wind direction, wind speed, and the like in the farmland 2.

When it is determined that it is possible to work (for example, the weather in the farmland 2 is "fine weather") in the farmland 2 (Yes at Step S503), the battery operation plan creation system 10 allocates the workable batteries 5 with respect to the work that is to be performed in the farmland 2 (Step S504). Specifically, the battery operation plan creation system 10 allocates the number of batteries 5 that satisfies the work demand (electric power [W] or the required number of batteries) required for the work to be performed in the farmland 2, to the work performed in the farmland 2. Then, the battery operation plan creation system 10 sets the delivery destination of the allocated workable batteries 5 to this farmland 2.

Next, the battery operation plan creation system 10 determines whether or not the workable batteries 5 have been able to be allocated to the work in each workable farmland 2 (Step S505). When the workable batteries 5 have been able to be allocated to the work in each workable farmland 2, the process proceeds to Step S506, and when the workable batteries 5 have not been able to be allocated to the work in each workable farmland 2, the process proceeds to Step S508.

When it is determined that the workable batteries 5 have been able to be allocated to the work in the workable farmland 2 (Yes at Step S505), the battery operation plan creation system 10 does not change and maintain time of the work to which the workable batteries 5 have been able to be allocated (Step S506), and stores the updated operation plan 311 for the batteries 5 (Step S507).

When it is determined that the workable batteries 5 have not been able to be allocated to the work in the workable farmland 2 (No at Step S505), the battery operation plan creation system 10 delays the time of the work to which the workable batteries 5 have not been able to be allocated (Step S508), and stores the updated operation plan 311 for the batteries 5 (Step S509).

On the other hand, when it is determined that it is impossible to work in the farmland 2 (for example, the weather of the farmland 2 is "rain") (No at Step S503), the battery operation plan creation system 10 delays the time of the work in this farmland 2 (Step S510) and stores the updated operation plan 311 for the batteries 5 (Step S511).

Regarding the unworkable batteries 5, the battery operation plan creation system 10 confirms a status of each unworkable battery 5 and determines whether or not each battery 5 is under charging (Step S512).

When it is determined that each battery 5 is not under charging (No at Step S512), the battery operation plan creation system 10 reads the nano-grid information 307 and the nano-grid weather information 303 (Step S513). The nano-grid information 307 includes, for example, location information of the nano-grid 1, a power storage amount [kWh] stored by the electricity storage facility 1b of the nano-grid 1, a power generation capacity of the nano-grid 1, and the like. The nano-grid weather information 303 is chronological information of weather, ambient temperature, precipitation probability, wind direction, wind speed, solar radiation amount, and the like in the nano-grid 1.

Then, the battery operation plan creation system 10 allocates the unworkable batteries 5 to the nano-grid 1 based on the read nano-grid information 307 (power storage amount, power generation capacity) and nano-grid weather information 303 (Step S514). That is, the delivery destination (charge destination) of the unworkable batteries 5 is set to the nano-grid 1.

On the other hand, when it is determined that each battery 5 is under charging (Yes at Step S512), the battery operation plan creation system 10 delays the time of the work in each farmland 2 (Step S515), and stores the updated operation plan 311 for the batteries 5 (Step S516).

At Step S501, when it is determined that there is no workable battery 5 (No at Step S501), the battery operation plan creation system 10 delays the time of the work in each farmland 2 ((Step S517), and stores the updated operation plan 311 for the batteries 5 (Step S518). When the processes of Step S517 and Step S518 are executed, the processes of Step S515 and Step S516 are not redundantly executed.

Then, after storing the updated operation plan 311 for the batteries 5 (Step S507, Step S509, Step S511, Step S516), the battery operation plan creation system 10 stores a current location and a destination of the batteries 5 (Step S519).

### (Charge Destination Search Flow of Battery 5)

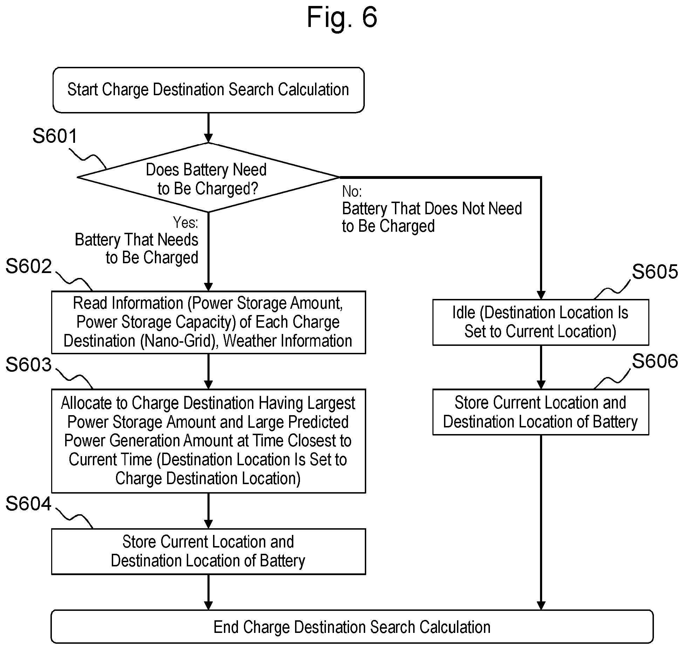

Fig. 6 is a flowchart illustrating a search calculation of the charge destination of the battery of Embodiment 1. With reference to Fig. 6, the search calculation of the charge destination of the battery 5 will be described. The flowchart in Fig. 6 is a flowchart illustrating a detail of Step S409 in Fig. 4.

First, the battery operation plan creation system 10 determines whether or not the battery 5 needs to be charged (Step S601). For example, when the work requiring the battery 5 is not scheduled for a long period of time, it is determined that the battery 5 does not need to be charged.

Regarding the battery 5 that needs to be charged (Yes at Step S601), the battery operation plan creation system 10 reads the nano-grid information 307 and the nano-grid weather information 303 (Step S602).

Then, the battery operation plan creation system 10 allocate the battery 5 that needs to be charged to the nano-grid 1 based on the read nano-grid information 307 and nano-grid weather information 303 (Step S603). Specifically, the battery operation plan creation system 10 allocates the battery 5 that needs to be charged to the charge destination (nano-grid 1) having the largest power storage amount and the large predicted power generation amount at the time closest to the current time. At this time, the battery operation plan creation system 10 sets this charge destination (nano-grid 1) as the delivery destination of the battery 5 that needs to be charged.

Then, the battery operation plan creation system 10 stores the current location and the destination of the battery 5 (Step S604).

Regarding the battery 5 that does not need to be charged (No at Step S601), the battery operation plan creation system 10 sets the current location as the delivery destination of the battery 5 that does not need to be charged (Step S605). Subsequently, the battery operation plan creation system 10 stores the current location and the destination of the battery 5 (Step S606).

### (Integrated Work Plan 700)

Fig. 7 are diagrams illustrating details of the integrated work plans of Embodiment 1. With reference to Fig 7, the details of the integrated work plans of Embodiment 1 will be described. The integrated work plans 700 indicated in Fig. 7 are data groups in which the temporary work plans 304 collected from each farmland 2 by the battery operation plan creation system 10 are integrated.

The integrated work plan 700 of Fig. 7(a) is data in a table format indicating an electric power required for each farmland 2 (a required electric power [W]) chronologically. The integrated work plan 700 of Fig. 7(a) includes an ID 701, a time 702, and a required electric power 703 of the farmland 2. According to the integrated work plan 700 of Fig. 7(a), at a time "1", the electric power of 10000 [W] is required in a farmland ID "1", the electric power of 7500 [W] is required in a farmland ID "2", and the electric power of 5000 [W] is required in a farmland ID "3".

While the integrated work plan 700 of Fig. 7(a) is data including the required electric power [W], the integrated work plan 700 may be data including the required number of batteries instead of the required electric power [W]. That is, the integrated work plan 700 of Fig. 7(b) is data in a table format illustrating the number of batteries 5 required for each farmland 2 (required number of batteries) chronologically. The integrated work plan 700 of Fig. 7(b) includes the ID 701, the time 702, and a required number of batteries 704 of the farmland 2. According to the integrated work plan 700 of Fig. 7(b), at the time "1", "4" batteries 5 are required in the farmland ID "1", "3" batteries 5 are required in the farmland ID "2", and "2" batteries 5 are required in the farmland ID "3".

### (Farmland Weather Information 302)

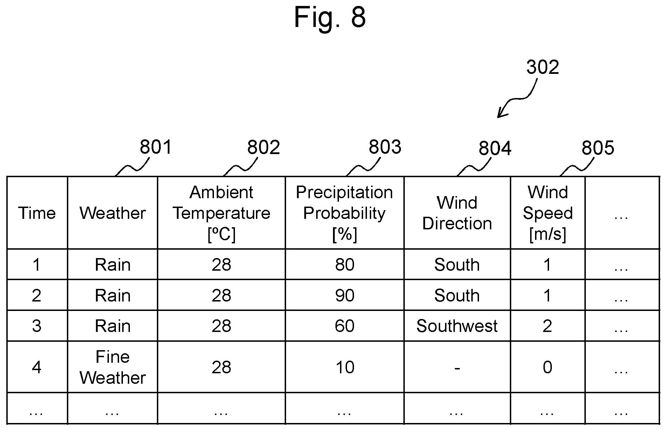

Fig. 8 is a diagram illustrating a detail of the farmland weather information of Embodiment 1. With reference to Fig. 8, the detail of the farmland weather information 302 of Embodiment 1 will be described. The farmland weather information 302 indicated in Fig. 8 may be weather information obtained from an organization that provides weather information and may be weather information estimated by the battery operation plan creation system 10 from past weather information. The battery operation plan creation system 10 stores the farmland weather information 302 indicated in Fig. 8 for each farmland 2.

The farmland weather information 302 is a data group that chronologically indicates weather information 801 indicating the weather (such as fine weather, rain, and cloudy weather) in the farmland 2, ambient temperature information 802 indicating the ambient temperature [°C] in the farmland 2, precipitation probability information 803 indicating the precipitation probability [%] in the farmland 2, wind direction information 804 indicating the wind direction in the farmland 2, and wind speed information 805 indicating the wind speed [m/s] in the farmland 2.

### (Nano-Grid Information 307)

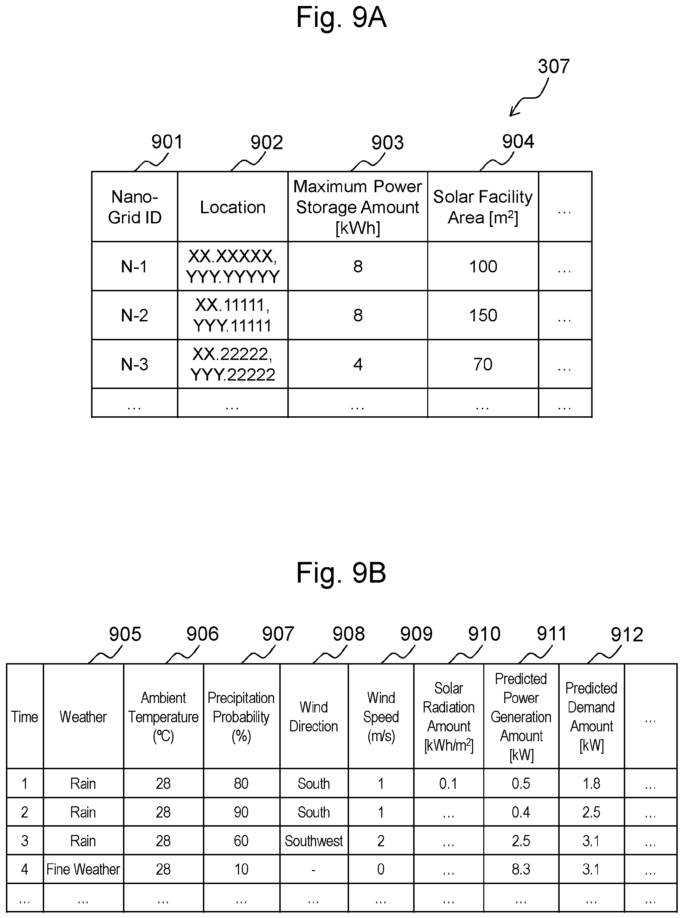

Fig. 9A is a diagram illustrating a detail of the nano-grid information of Embodiment 1. With reference to Fig. 9A, the detail of the nano-grid information 307 of Embodiment 1 will be described. The nano-grid information 307 indicated in Fig. 9A is information regarding the nano-grid 1 and includes a nano-grid ID 901 indicating the ID of the nano-grid 1, location information 902 indicating the location (latitude, longitude) of the nano-grid 1, maximum power storage amount information 903 indicating the maximum power storage amount that the electricity storage facility 1b of the nano-grid 1 can store, and solar facility area information 904 indicating the solar facility area [m²]. Since the nano-grid 1 indicated in Fig. 9A is a nano-grid that performs photovoltaic power generation, it has the solar facility area information 904. When the nano-grid 1 is a nano-grid that performs the wind power generation, the number of windmills may be used.

### (Nano-Grid Weather Information 303)

Fig. 9B is a diagram illustrating a detail of the nano-grid weather information of Embodiment 1. With reference to Fig. 9B, the detail of the nano-grid weather information 303 of Embodiment 1 will be described. The nano-grid weather information 303 indicated in Fig. 9B may be weather information obtained from an organization that provides weather information or may be weather information estimated by the battery operation plan creation system 10 from past weather information. The battery operation plan creation system 10 stores the nano-grid weather information 303 indicated in Fig. 9B for each nano-grid 1.

The nano-grid weather information 303 is a data group that chronologically indicates weather information 905 indicating the weather in the nano-grid 1, ambient temperature information 906 indicating the ambient temperature [°C] in the nano-grid 1, precipitation probability information 907 indicating the precipitation probability [%] in the nano-grid 1, wind direction information 908 indicating the wind direction in the nano-grid 1, wind speed information 909 indicating the wind speed [m/s] in the nano-grid 1, solar radiation amount information 910 indicating the solar radiation amount [kWh/m²] in the nano-grid 1, predicted power generation amount information 911 indicating the predicted power generation amount [kW] by the power generation facility 1a in the nano-grid 1, and predicted demand amount information 912 indicating the predicted demand amount [kW] to the nano-grid 1. The predicted demand amount is, for example, an electric power demand amount predicted to be used by general households receiving electric power supply from the nano-grid 1.

### (Integrated Information)

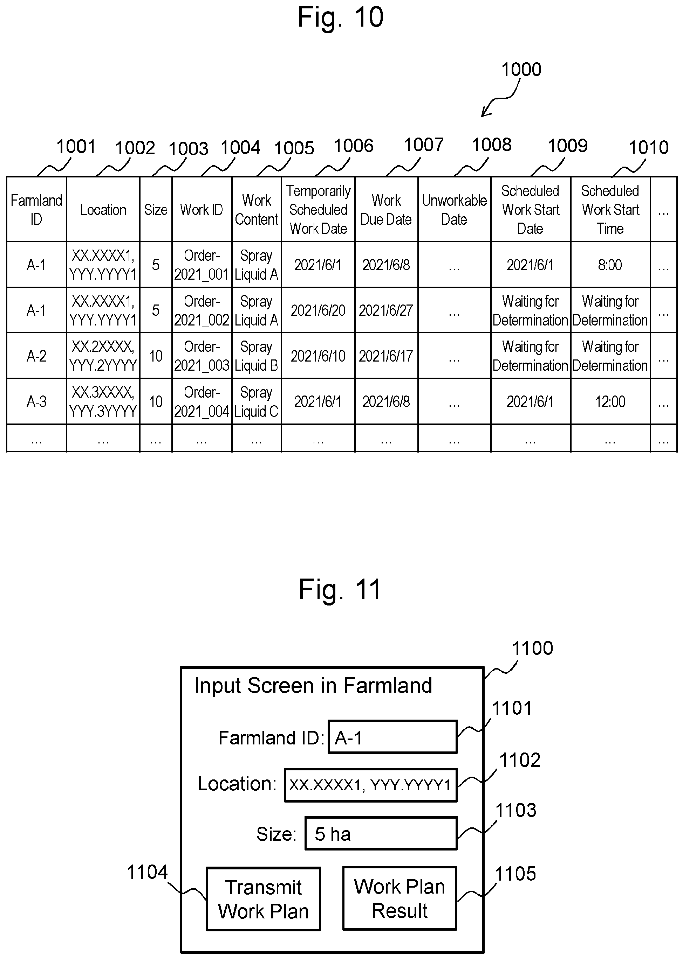

Fig. 10 is a diagram illustrating the integrated information of Embodiment 1. The integrated information is information where various kinds of pieces of information collected from each farmland 2 are integrated and is managed by the battery operation plan creation system 10 in a database.

Integrated information 1000 includes a farmland **ID** 1001 indicating the **ID** of the farmland 2, location information 1002 indicating the location (latitude, longitude) of the farmland 2, size information 1003 indicating the size of the farmland 2. The farmland information 306 is information that includes the farmland **ID** 1001, the location information 1002, and the size information 1003. The integrated information 1000 includes a work **ID** 1004 indicating the **ID** of the work performed in the farmland 2 and work content information 1005 indicating the content of the work. The integrated information 1000 includes a temporarily scheduled work date 1006 indicating the temporarily scheduled date for performing the work, a work due date 1007 indicating the due date of the work, and an unworkable date 1008 when the work cannot be performed. The integrated information 1000 includes a scheduled work start date 1009 indicating the scheduled date to start the work and a scheduled work start time 1010 indicating the time to start the work that have been determined by the battery operation plan creation system 10. The date and time indicated in the scheduled work start date 1009 and the scheduled work start time 1010 becomes "waiting for determination" when the battery operation plan creation system 10 has not determined. The date and time indicated in the scheduled work start date 1009 and the scheduled work start time 1010 are appropriately changed based on the farmland weather information 302 and the like.

### (Farmland Information Input Screen 1100)

Fig. 11 is a diagram illustrating a screen for inputting the farmland information in Embodiment 1. A user of the computer of the farmland 2 can transmit the farmland information 306 to the battery operation plan creation system 10 via the farmland information input screen 1100 in Fig. 11. The farmland information input screen 1100 in Fig. 11 is a screen displayed by a web browser installed on the computer of the farmland 2 based on, for example, HTML data provided by the battery operation plan creation system 10 as a Web server.

The farmland information input screen 1100 is a screen for inputting the farmland information 306 and includes a farmland ID input field 1101 for inputting the farmland ID, a location input field 1102 for inputting the location (latitude, longitude) of the farmland 2, a size input field 1103 for inputting the size of the farmland 2, a work plan transmission button 1104 for displaying a work plan input screen 11040 for inputting the temporary work plan 304 for the farmland 2, and a work plan result display button 1105 for displaying a list of the temporary work plan 304 and the determined work plan 313 that have been inputted. The required electric power [W] and the required number of batteries in the work plan are determined by the size of the farmland 2.

### (Work Plan Input Screen 11040)

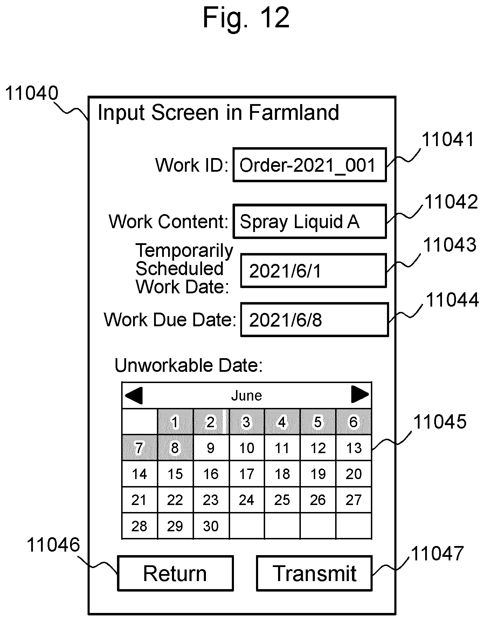

Fig. 12 is a diagram illustrating a screen for inputting the temporary work plan of Embodiment 1. The work plan input screen 11040 of Fig. 12 is a screen displayed when the work plan transmission button 1104 in Fig. 11 is selected by a user.

The work plan input screen 11040 includes a work ID input field 11041 for inputting the work ID, a work content input field 11042 for inputting the work content, a temporarily scheduled date input field 11043 for inputting the temporarily scheduled work date, a due date input field 11044 for inputting the work due date, and an unworkable date selection unit 11045 specifying the unworkable date. The work plan input screen 11040 includes a return button 11046 for returning to the farmland information input screen 1100 as a previous screen and a transmission button 11047 for transmitting information input into the work plan input screen 11040 to the battery operation plan creation system 10.

### (List Screen 11050 of Work Plan)

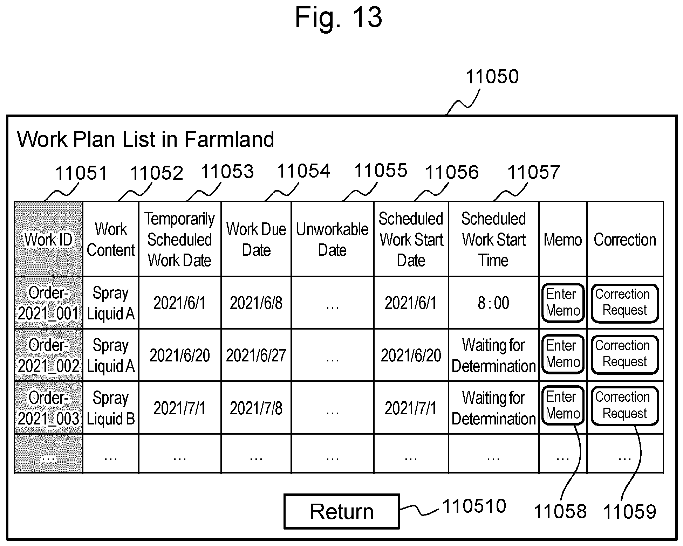

Fig. 13 is a diagram illustrating a list screen of the work plan of Embodiment 1. The list screen 11050 indicated in Fig. 13 is a screen displayed when the work plan result display button 1105 in Fig. 11 is selected by a user. The list screen 11050 is a screen that displays a list of the temporary work plan 304 and the determined work plan 313 that are to be performed in the farmland 2.

The list screen 11050 displays details of the work (a work content 11052, a temporarily scheduled work date 11053, a work due date 11054, a scheduled work start date 11056, a scheduled work start time 11057) input on the work plan input screen 11040 for each work ID 11051. The list screen 11050 includes a memo entry button 11058 for inputting a memo and a correction request button 11059 for correcting the temporary work plan 304 and the determined work plan 313, for each work ID 11051. The list screen 11050 includes a return button 110510 for returning to the farmland information input screen 1100 as a previous screen.

### (Battery Information 305)

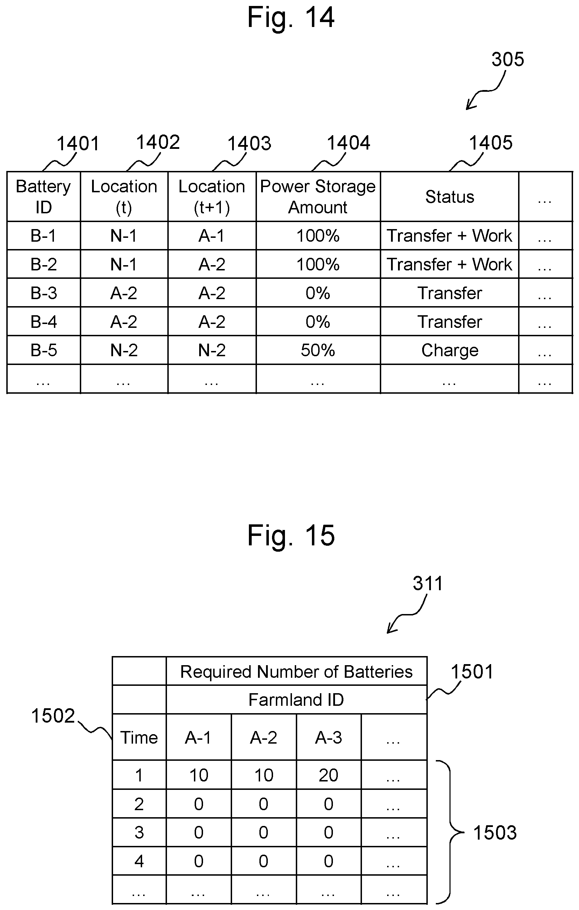

Fig. 14 is a diagram illustrating the battery information of Embodiment 1. The battery information 305 indicated in Fig. 14 is information of the plurality of batteries 5 managed by the battery operation plan creation system 10.

The battery information 305 includes a battery ID 1401 indicating the ID of the battery 5, location (t) information 1402 indicating the location of the battery 5 at a time t, location (t+1) information 1403 indicating the location of the battery 5 at a time t+1, power storage amount information 1404 indicating the power storage amount of the battery 5, and status information 1405 indicating the status of the battery 5. The power storage amount information 1404 may be displayed in % or may be the remaining capacity [kWh].

### (Operation Plan 311)

Fig. 15 is a diagram illustrating the battery operation plan of the battery of Embodiment 1. With reference to Fig. 15, details of the operation plan 311 of the battery 5 of Embodiment 1 will be described.

The operation plan 311 of the battery 5 indicated in Fig. 15 is data in a table format chronologically indicating the number of batteries required for each farmland 2. The operation plan 311 includes an ID 1501, a time 1502, and a required number of batteries 1503 of the farmland 2. The operation plan 311 in Fig. 15 indicates that at a time "1", 10 batteries 5 are required for farmland ID "A-1", 10 batteries 5 are required for farmland ID "A-2", and 10 batteries 5 are required for farmland ID "A-3".

### (Delivery Plan 312)

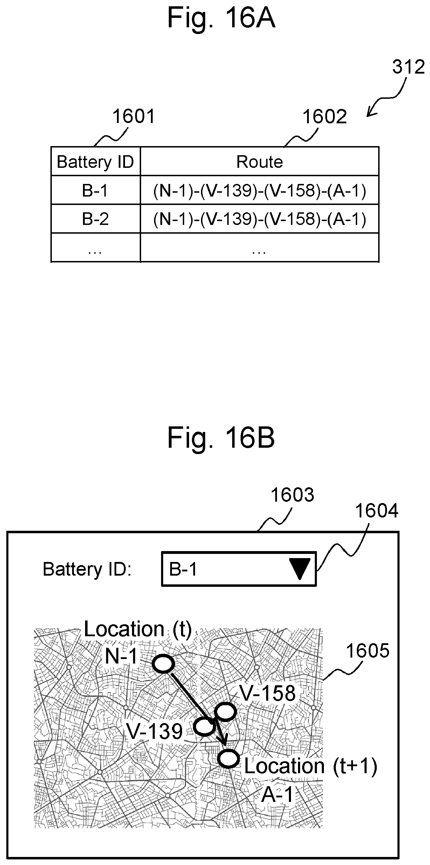

Fig. 16A is a diagram illustrating the delivery plan of the battery of Embodiment 1. With reference to Fig. 16A, details of the delivery plan 312 of the battery 5 of Embodiment 1 will be described.

As indicated in Fig. 16A, the delivery plan 312 of the battery 5 includes a battery ID 1601 indicating the ID of the battery 5 and route information 1602 indicating a delivery route of the battery 5. The delivery plan 312 of the battery 5 in Fig. 16A indicates a route along which the battery 5 with the battery ID 1601 of "B-1" is delivered from the nano-grid (N-1) to the farmland (A-1) via the relay point (V-139) and the relay point (V-158).

### (Delivery Map 1603)

Fig. 16B is a diagram illustrating the delivery map of Embodiment 1. With reference to Fig. 16B, the delivery map 1603 of the battery 5 of Embodiment 1 will be described.

The delivery map 1603 indicated in Fig. 16B includes a selection box 1604 for selecting the battery ID and map information 1605 where each point of the route information 1602 is plotted on the map. In the display unit 19 of the battery operation plan creation system 10, a user can confirm a route along which the battery 5 with the battery ID "B-1" is delivered between the time t and the time t+1 on the map. The map used for the map information 1605 is created based on the map information 300.

### (Update of Operation Plan for Battery 5)

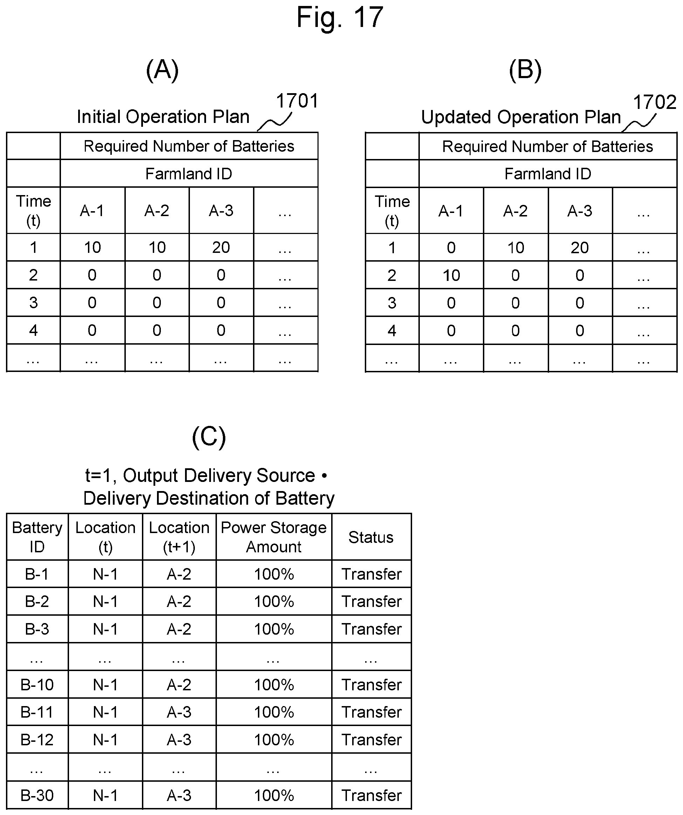

Fig. 17 includes a diagram illustrating an initial operation plan for the battery of Embodiment 1, a diagram illustrating an updated operation plan for the battery of Embodiment 1, and a diagram illustrating a delivery plan for the battery of Embodiment 1. With reference to Fig. 17, the operation plan, the updated operation plan, and the battery delivery for the battery 5 of Embodiment 1 will be described. In Embodiment 1, the operation plan and the delivery plan for 30 batteries 5 with a power storage amount of 100% prepared in the nano-grid 1 (ID: N-1) will be described.

First, the battery operation plan creation system 10 collects the temporary work plans 304 from each farmland 2. As indicated in an initial operation plan 1701 in Fig. 17(A), the battery operation plan creation system 10 receives the temporary work plan 304 that requires 10 batteries 5 at a time "1" from the farmland 2 with the farmland ID "A-1", receives the temporary work plan 304 that requires 10 batteries 5 at the time "1" from the farmland 2 with the farmland ID "A-2", and receives the temporary work plan 304 that requires 20 batteries 5 at the time "1" from the farmland 2 with the farmland ID "A-3".

When the weather of the farmland 2 with the farmland ID "A-1" is "rain" and the weathers of the farmlands 2 with the farmland IDs "A-2" and "A-3" are "fine weather" at the time "1", the battery operation plan creation system 10 delays the time of the work in the farmland 2 with the farmland ID "A-1" as indicated in an updated operation plan 1702 in Fig. 17(B).

Even in a case where the weathers of the farmlands 2 with the farmland IDs "A-1" to "A-3" at the time "1" are "fine weather", when there is a shortage of workable batteries 5, it is required to delay the time of the work to which workable batteries 5 cannot be allocated. In the example of Fig. 17, while a total of 40 batteries 5 are required at time "1", only 30 workable batteries 5 are available in Embodiment 1. Consequently, the battery operation plan creation system 10 delays the time of the work to which the batteries 5 cannot be allocated. For example, as indicated in the updated operation plan 1702 in Fig. 17(B), the battery operation plan creation system 10 allocates the batteries 5 to the work in the farmland 2 with the farmland ID "A-2" and the work in the farmland 2 with the farmland ID "A-3", and delays the time of the work in the farmland 2 with the farmland ID "A-1". For the works at the same time, the battery operation plan creation system 10 allocates the batteries 5 by prioritizing in accordance with at least one of:
(1) a workload of the work;
(2) a completion date of the work; and
(3) a distance between the farmland and the battery.
In the example in Fig. 17, for example, the battery operation plan creation system 10 allocates the batteries 5 to the work in the farmland 2 with the farmland ID "A-3" having a largest workload of the work and then, allocates the batteries 5 to the work in the farmland 2 with the farmland ID "A-2" where the completion date of the work is close. As a result, the battery operation plan creation system 10 delays the time of the work in the farmland 2 with the farmland ID "A-1" to which workable batteries 5 cannot be allocated.

The battery operation plan creation system 10 creates the delivery plan for the batteries 5 based on the updated operation plan 1702 in Fig. 17(B). As indicated in Fig. 17(C), the battery operation plan creation system 10 creates the delivery plan for 30 batteries 5 with the battery IDs of "B-1" to "B-30". Specifically, to deliver 10 batteries 5 to the farmland 2 with the farmland ID "A-2", the battery operation plan creation system 10 sets the location of the 10 batteries 5 with the battery IDs of "B-1" to "B-10" at time (t+1) to "A-2". To deliver 20 batteries 5 to the farmland 2 with the farmland ID "A-3", the battery operation plan creation system 10 sets the location of the 20 batteries 5 with the battery IDs of "B-11" to "B-30" at time (t+1) to "A-3". Then, the status of each battery 5 is set to "transfer".

### (Effect of Embodiment 1)

The operation plan calculation unit 308 of the data processing unit 113 creates the operation plan for the plurality of batteries 5 in the farmland 2 based on the temporary work plan 304 input by the input unit 111 and the farmland weather information 302. This allows creating the efficient operation plan 311 for the batteries 5 while considering uncertainties such as a farm work time caused by weather fluctuation.

The data processing unit 113 determines the nano-grid 1 for charging the plurality of batteries 5 based on the nano-grid weather information 303 and the nano-grid information 307. This allows improving usage efficiency of renewable energy and performing efficient charge of the battery 5 while considering uncertainties such as charge efficiency at the nano-grid 1 caused by weather fluctuation.

The delivery plan calculation unit 309 of the data processing unit 113 creates the delivery plan 312 for delivering the plurality of batteries 5 from the nano-grid 1 to the farmland 2 in accordance with the operation plan 311 for the battery 5. This allows easily grasping the locations and the status of the plurality of batteries 5.

The data processing unit 113 outputs the determined work plan 313, which is determined, to the computer (output device) of the farmland 2. This allows confirming a work start time and the like in the farmland 2 and performing the work efficiently by referring to the determined work plan 313.

With respect to a plurality of works scheduled at the same time, the data processing unit 113 allocates the batteries 5 in accordance with at least one preferential order of:
(1) a workload of the work;
(2) a completion date of the work; and
(3) a distance between the farmland and the battery.

Since the batteries 5 can be allocated to the work at the same time in accordance with the predetermined preferential order, it is possible to perform the work requiring the battery 5 in this order from the work having a higher priority.

When the battery 5 cannot be allocated to the work, the work time for the work can be delayed. As a result, the work can be executed when the battery 5 becomes allocatable.

When weather in the farmland 2 is bad, the time of the work can be delayed. As a result, the work can be executed when the weather in the farmland 2 recovers.

### <Embodiment 2>

In Embodiment 1, while the operation plan and the delivery plan for 30 batteries 5 with a power storage amount of 100% prepared in the nano-grid 1 (ID: N-1) have been described, in Embodiment 2, the operation plan and the delivery plan for 20 batteries 5 with a power storage amount of 100% prepared in the nano-grid 1 (ID: N-1) will be described. Descriptions overlapping those of Embodiment 1 will be appropriately omitted.

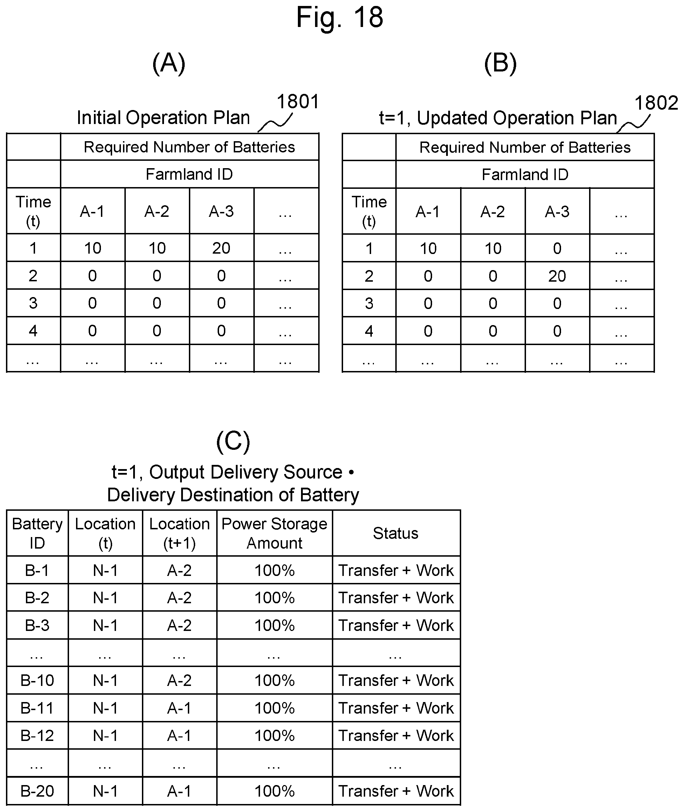

First, the battery operation plan creation system 10 collects the temporary work plans 304 from each farmland 2. An initial operation plan 1801 in Fig. 18(A) is the same as the initial operation plan 1701 in Fig. 17(A) of Embodiment 1.

### (Operation Plan at Time "1")

Even when the weathers in the farmland 2 with the farmland IDs "A-1" to "A-3" at a time "1" are "fine weather", when there is a shortage of workable batteries 5, it is necessary to delay the time of the work to which the workable batteries 5 cannot be allocated. In the example of Fig. 18, while a total of 40 batteries 5 is required at the time "1", there are only 20 workable batteries 5 in Embodiment 2. Consequently, the battery operation plan creation system 10 delays the time of the work to which the batteries 5 cannot be allocated. For example, as indicated in an updated operation plan 1802 in Fig. 18(B), the battery operation plan creation system 10 allocates the batteries 5 in this order from the work with a small workload. Specifically, the battery operation plan creation system 10 allocates the batteries 5 to the work in the farmland 2 with the farmland ID "A-1" and the work in the farmland 2 with the farmland ID "A-2", and delays the time of the work in the farmland 2 with the farmland ID "A-3".

The battery operation plan creation system 10 creates the delivery plan for the batteries 5 based on the updated operation plan 1802 in Fig. 18(B). As indicated in Fig. 18(C), the battery operation plan creation system 10 creates the delivery plan for 20 batteries 5 with the battery IDs "B-1" to "B-20" at the time "1". Specifically, in order to deliver 10 batteries 5 to the farmland 2 with the farmland ID "A-2", the battery operation plan creation system 10 sets the location of the 10 batteries 5 with the battery IDs "B-1" to "B-10" at a time (t+1) to "A-2". In order to deliver 10 batteries 5 to the farmland 2 with the farmland ID "A-1", the battery operation plan creation system 10 sets the location of the 10 batteries 5 with the battery IDs "B-11" to "B-20" at the time (t+1) to "A-1". Then, the battery operation plan creation system 10 sets the status of each battery 5 to "transfer + work".

### (Operation Plan at Time "2")

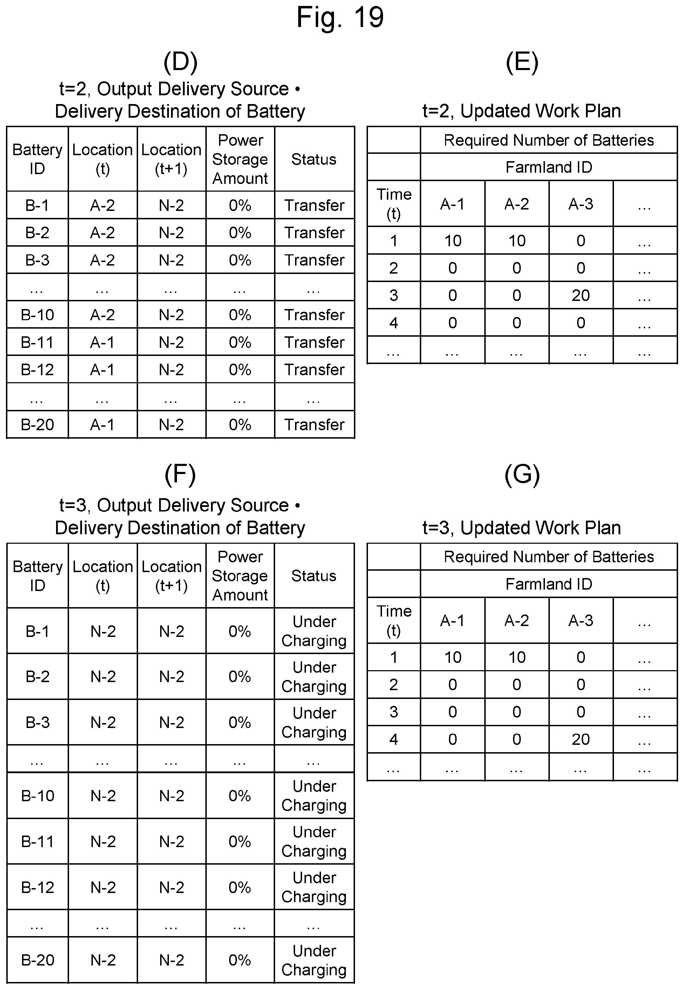

Next, the battery operation plan creation system 10 creates the delivery plan and the operation plan for 20 batteries 5 with the battery IDs "B-1" to "B-20" at a time "2". As indicated in Fig. 19(D), in order for 10 batteries 5 to work in the farmland 2 with the farmland ID "A-1" and for the 10 batteries 5 to work in the farmland 2 with the farmland ID "A-2", the battery operation plan creation system 10 sets the power storage amount of the batteries 5 with the battery IDs "B-1" to "B-20" to "0 [%]".

Since there is no workable battery 5 at the time "2", the battery operation plan creation system 10 needs to deliver it to the charge destination (nano-grid 1) of the battery 5. The battery operation plan creation system 10 determines the delivery destination of the unworkable batteries 5 based on the nano-grid weather information 303 and the like. While the nano-grids N-1 and N-2 exist as the delivery destinations (charge destinations) of the batteries 5, when the weather in the nano-grid N-2 is "fine weather" and the weather in the nano-grid N-1 is "rain", the battery operation plan creation system 10 selects the nano-grid N-2 as the charge destination of the batteries 5 and sets the nano-grid N-2 as the delivery destination of the batteries 5.

At this time, as indicated in Fig. 19(E), since there is no workable battery 5 at a time "2", the battery operation plan creation system 10 delays the time of the work in the farmland 2 with the farmland ID "A-3" at the time "2".

### (Operation Plan at Time "3")

Next, the battery operation plan creation system 10 creates the delivery plan and the operation plan for 20 batteries 5 with the battery IDs "B-1" to "B-20" at a time "3". As indicated in Fig. 19(F), in order to charge the batteries 5 with the battery IDs "B-1" to "B-20" by the nano-grid N-2, the battery operation plan creation system 10 keeps the location of batteries 5 at N-2. Then, the battery operation plan creation system 10 sets the status of each battery 5 to "under charging".

At this time, as indicated in Fig. 19(G), since there is no workable battery 5 at the time "3", the battery operation plan creation system 10 further delays the time of the work in the farmland 2 with the farmland ID "A-3" at the time "3".

### (Operation Plan at Time "4")

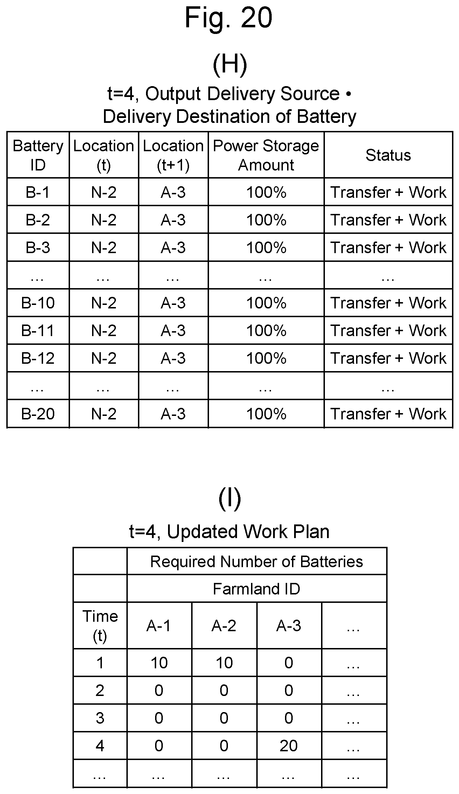

Next, the battery operation plan creation system 10 creates the delivery plan and the operation plan for 20 batteries 5 with the battery IDs "B-1" to "B-20" at a time "4". As indicated in Fig. 20H, in order to deliver the batteries 5 with the battery IDs "B-1" to "B-20", which have already been charged, to the farmland 2 with the farmland ID "A-3", the battery operation plan creation system 10 sets the location of the batteries 5 to "A-3". Then, the battery operation plan creation system 10 sets the status of each battery 5 as "transfer + work".

At this time, as indicated in Fig. 20I, the battery operation plan creation system 10 allocates the workable batteries 5 to the work in the farmland 2 with the farmland ID "A-3" at the time "4".

### (Effect of Embodiment 2)

In Embodiment 2, compared with Embodiment 1, the work in the farmland 2 can be performed with a smaller number of batteries 5. This allows suppressing cost increase required for the battery 5. Other effects are the same as those of Embodiment 1.

The present disclosure is not limited to the embodiments described above and includes various modifications. The Embodiments described above have been described in detail to facilitate understanding of the present disclosure and are not necessarily limited to those having all the described configuration. It is also possible to replace part of the configuration of one Embodiment with the configuration of another Embodiment, and it is also possible to add the configuration of another Embodiment to the configuration of one Embodiment. It is also possible to add, delete, or replace part of the configuration of each Embodiment with another configuration.

### Reference Signs List

- 1: Nano-grid
- 1a: Power generation facility
- 1b: Electricity storage facility
- 2: Farmland
- 3: Relay point
- 4: Drone
- 5: Battery
- 6: Transportation vehicle
- 10: Battery operation plan creation system
- 11: CPU
- 12: Auxiliary storage device
- 13: Input I/F
- 14: Memory
- 15: Communication I/F
- 16: Output I/F
- 17: Keyboard
- 18: Computer mouse
- 19: Display
- 111: Input unit (input means)
- 112: Output unit
- 113: Data processing unit (processing means)
- 300: Map information
- 301: Weather information
- 302: Farmland weather information
- 303: Nano-grid weather information
- 304: Temporary work plan
- 305: Battery information
- 306: Farmland information
- 307: Nano-grid information
- 308: Operation plan calculation unit
- 309: Delivery plan calculation unit
- 310: Work plan calculation unit
- 311: Operation plan
- 312: Delivery plan
- 313: Determined work plan

## Claims

1. An information processing apparatus (10) that creates an operation plan (311) for a plurality of batteries (5) charged at a nano-grid (1) including at least one of a power generation facility (1a) or an electricity storage facility (1b), the information processing apparatus (10) comprising:
an input means (111) that inputs a work plan (304) including a work demand for a number of batteries from the plurality of batteries, the number of batteries required for a work in a demand area (2), and inputs demand area weather information (302) indicating a weather of the demand area (2); and
a processing means (113) that delays a start time of the work of the work plan in response to an indication from the demand area weather information (302) input by the input means (111) that the demand area (2) is unworkable,
wherein the processing means (113) creates the operation plan (311) for the plurality of batteries (5) that allocates the required number of batteries to the demand area (2) at a time based on the delayed start time of the work of the work plan input by the input means.

2. The information processing apparatus (10) according to claim 1,
wherein the input means (111) further inputs nano-grid weather information (303) indicating a weather in an installation location of the nano-grid (1) and nano-grid information regarding the nano-grid (1), and
the processing means (113) determines the nano-grid (1) for charging the plurality of batteries (5) based on the nano-grid weather information (303) and the nano-grid information input by the input means (111).

3. The information processing apparatus (10) according to claim 2,
wherein the nano-grid information includes location information indicating a location of the nano-grid (1), and at least one of a power generation capacity of the power generation facility (1a) or a power storage amount of the electricity storage facility (1b), and
the processing means (113) determines the nano-grid (1) for charging the plurality of batteries (5) based on at least one of the location information, a power generation capacity of the power generation facility (1a), or a power storage amount of the electricity storage facility (1b).

4. The information processing apparatus (10) according to claim 1,
wherein the processing means (113) creates a delivery plan for delivering the plurality of batteries (5) to the demand area (2) from the nano-grid (1) in accordance with the operation plan (311).

5. The information processing apparatus (10) according to claim 1,
wherein the processing means (113) corrects or determines the work plan in accordance with the operation plan (311) and transmits the work plan that is corrected or determined to an output device of the demand area (2).

6. The information processing apparatus (10) according to claim 1,
wherein the processing means (113) allocates the batteries (5) whose number satisfies the work demand of the work plan and maintains time of the work plan in the demand area (2).

7. The information processing apparatus (10) according to claim 6,
wherein the processing means (113), with respect to the plurality of work scheduled at a same time, allocates the batteries (5) in accordance with at least one preferential order of:
(1) a workload of the work;
(2) a completion date of the work; and
(3) a distance between the demand area (2) and the battery (5).

8. The information processing apparatus (10) according to claim 6,
wherein the processing means (113) delays a start time of the work of the work plan when the batteries (5) whose number satisfies the work demand of the work plan are unallocatable.

9. An energy system (100) comprising:
a nano-grid (1) that includes at least one of a power generation facility (1a) or an electricity storage facility (1b); and
an information processing apparatus (10) that creates an operation plan (311) for a plurality of batteries (5) charged at the nano-grid (1), wherein
the information processing apparatus (10):
inputs a work plan (304) including a work demand for a number of batteries from the plurality of batteries (5), the number of batteries required for a work in a demand area (2), and inputs demand area weather information (302) indicating a weather of the demand area (2);
delays a start time of the work of the input work plan in response to an indication from the input demand area weather information (302) that the demand area (2) is unworkable; and
creates the operation plan (311) for the plurality of batteries (5) that allocates the required number of batteries to the demand area (2) at a time based on the delayed start time of the work of the input work plan.

10. A battery operation plan creation method that creates an operation plan (311) for a plurality of batteries (5) charged in a nano-grid (1) including at least one of a power generation facility (1a) or an electricity storage facility (1b), the battery operation plan creation method comprising:
inputting a work plan (304) including a work demand for a number of batteries from the plurality of batteries (5), the number of batteries required for a work in a demand area (2);
inputting demand area weather information (302) indicating a weather of the demand area (2)
delaying a start time of the work of the input work plan in response to an indication from the input demand area weather information (302) that the demand area (2) is unworkable; and
creating the operation plan (311) for the plurality of batteries (5) that allocates the required number of batteries to the demand area (2) at a time based on the delayed start time of the work of the input work plan (304).

## Patentansprüche

1. Informationsverarbeitungsvorrichtung (10), die einen Betriebsplan (311) für eine Vielzahl von Batterien (5) erstellt, welche an einem Nanonetz (1) geladen werden, das zumindest eines aus einer Leistungserzeugungsanlage (1a) oder einer Elektrizitätsspeicheranlage (1b) umfasst, wobei die Informationsverarbeitungsvorrichtung (10) Folgendes umfasst:
ein Eingabemittel (111), das einen Arbeitsplan (304), welcher eine Arbeitsnachfrage für eine Anzahl von Batterien aus der Vielzahl von Batterien umfasst, eingibt, wobei die Anzahl der Batterien für eine Arbeit in einem Nachfragebereich (2) erforderlich ist, und Nachfragebereich-Wetterinformationen (302), die ein Wetter des Nachfragebereichs (2) angeben, eingibt; und
ein Verarbeitungsmittel (113), das eine Anfangszeit der Arbeit des Arbeitsplans als Antwort auf eine Angabe aus den von dem Eingabemittel (111) eingegebenen Nachfragebereich-Wetterinformationen (302), dass der Nachfragebereich (2) nicht bearbeitbar ist, verzögert,
wobei das Verarbeitungsmittel (113) den Betriebsplan (311) für die Vielzahl von Batterien (5) erstellt, welcher zu einer Zeit beruhend auf der verzögerten Anfangszeit der Arbeit des von dem Eingabemittel eingegebenen Arbeitsplans dem Nachfragebereich (2) die erforderliche Anzahl von Batterien zuweist.

2. Informationsverarbeitungsvorrichtung (10) nach Anspruch 1,
wobei das Eingabemittel (111) ferner Nanonetz-Wetterinformationen (303) eingibt, die ein Wetter an einem Installationsstandort des Nanonetzes (1) angeben, und Nanonetzinformationen betreffend das Nanonetz (1) eingibt, und
wobei das Verarbeitungsmittel (113) das Nanonetz (1) zum Laden der Vielzahl von Batterien (5) beruhend auf den von dem Eingabemittel (111) eingegebenen Nanonetz-Wetterinformationen (303) und Nanonetzinformationen bestimmt.

3. Informationsverarbeitungsvorrichtung (10) nach Anspruch 2,
wobei die Nanonetzinformationen Standortinformationen, die einen Standort des Nanonetzes (1) angeben, und zumindest eines aus einer Leistungserzeugungskapazität der Leistungserzeugungsanlage (1a) oder einer Leistungsspeichermenge der Elektrizitätsspeicheranlage (1b) umfasst, und
wobei das Verarbeitungsmittel (113) das Nanonetz (1) zum Laden der Vielzahl von Batterien (5) beruhend auf zumindest einem aus den Standortinformationen, einer Leistungserzeugungskapazität der Leistungserzeugungsanlage (1a) oder einer Leistungsspeichermenge der Elektrizitätsspeicheranlage (1b) bestimmt.

4. Informationsverarbeitungsvorrichtung (10) nach Anspruch 1,
wobei das Verarbeitungsmittel (113) einen Lieferplan zum Liefern der Vielzahl von Batterien (5) zu dem Nachfragebereich (2) von dem Nanonetz (1) gemäß dem Betriebsplan (311) erstellt.

5. Informationsverarbeitungsvorrichtung (10) nach Anspruch 1,
wobei das Verarbeitungsmittel (113) den Arbeitsplan gemäß dem Betriebsplan (311) korrigiert oder bestimmt und den korrigierten oder bestimmten Arbeitsplan an eine Ausgabevorrichtung des Nachfragebereichs (2) sendet.

6. Informationsverarbeitungsvorrichtung (10) nach Anspruch 1,
wobei das Verarbeitungsmittel (113) die Batterien (5) zuordnet, deren Anzahl die Arbeitsnachfrage des Arbeitsplans deckt und die Zeit des Arbeitsplans im Nachfragebereich (2) beibehält.

7. Informationsverarbeitungsvorrichtung (10) nach Anspruch 6,
wobei das Verarbeitungsmittel (113) in Bezug auf die Vielzahl von Arbeit, die zu einer selben Zeit geplant ist, die Batterien (5) gemäß zumindest einer bevorzugten Reihenfolge aus folgenden zuweist:
(1) einer Arbeitslast der Arbeit;
(2) einem Abschlussdatum der Arbeit; und
(3) einer Entfernung zwischen dem Nachfragebereich (2) und der Batterie (5).

8. Informationsverarbeitungsvorrichtung (10) nach Anspruch 6,
wobei das Verarbeitungsmittel (113) eine Anfangszeit der Arbeit des Arbeitsplans verzögert, wenn die Batterien (5), deren Anzahl die Arbeitsnachfrage des Arbeitsplans deckt, nicht zuweisbar sind.

9. Energiesystem (100), umfassend:
ein Nanonetz (1), das zumindest eines aus einer Leistungserzeugungsanlage (1a) oder einer Elektrizitätsspeicheranlage (1b) umfasst; und
eine Informationsverarbeitungsvorrichtung (10), die einen Betriebsplan (311) für eine Vielzahl von Batterien (5) umfasst, welche an dem Nanonetz (1) geladen werden, wobei die Informationsverarbeitungsvorrichtung (10):
einen Arbeitsplan (304), welcher eine Arbeitsnachfrage für eine Anzahl von Batterien aus der Vielzahl von Batterien (5) umfasst, eingibt, wobei die Anzahl der Batterien für eine Arbeit in einem Nachfragebereich (2) erforderlich ist, und Nachfragebereich-Wetterinformationen (302), die ein Wetter des Nachfragebereichs (2) angeben, eingibt;
eine Anfangszeit der Arbeit des eingegebenen Arbeitsplans als Antwort auf eine Angabe aus den eingegebenen Nachfragebereich-Wetterinformationen (302), dass der Nachfragebereich (2) nicht bearbeitbar ist, verzögert; und
den Betriebsplan (311) für die Vielzahl von Batterien (5) erstellt, welcher zu einer Zeit beruhend auf der verzögerten Anfangszeit der Arbeit des eingegebenen Arbeitsplans dem Nachfragebereich (2) die erforderliche Anzahl von Batterien zuweist.

10. Batteriebetriebsplanerstellungsverfahren, das einen Betriebsplan (311) für eine Vielzahl von Batterien (5) erstellt, welche in einem Nanonetz (1) geladen werden, das zumindest eines aus einer Leistungserzeugungsanlage (1a) oder einer Elektrizitätsspeicheranlage (1b) umfasst, wobei das Batteriebetriebsplanerstellungsverfahren Folgendes umfasst:
Eingeben eines Arbeitsplans (304), welcher eine Arbeitsnachfrage für eine Anzahl von Batterien aus der Vielzahl von Batterien (5) umfasst, wobei die Anzahl der Batterien für eine Arbeit in einem Nachfragebereich (2) erforderlich ist;
Eingeben von Nachfragebereich-Wetterinformationen (302), die ein Wetter des Nachfragebereichs (2) angeben;
Verzögern einer Anfangszeit der Arbeit des eingegebenen Arbeitsplans als Antwort auf eine Angabe aus den eingegebenen Nachfragebereich-Wetterinformationen (302), dass der Nachfragebereich (2) nicht bearbeitbar ist; und
Erstellen des Betriebsplans (311) für die Vielzahl von Batterien (5), welcher zu einer Zeit beruhend auf der verzögerten Anfangszeit der Arbeit des von dem Eingabemittel eingegebenen Arbeitsplans (304) dem Nachfragebereich (2) die erforderliche Anzahl von Batterien zuweist.

## Revendications

1. Appareil de traitement d'informations (10) qui crée un plan de fonctionnement (311) pour une pluralité de batteries (5) chargées au niveau d'un nano-réseau (1) incluant au moins une installation de production d'énergie (1a) ou une installation de stockage d'électricité (1b), l'appareil de traitement d'informations (10) comprenant :
des moyens d'entrée (111) qui entrent un plan de travail (304) incluant une demande de travail pour un nombre de batteries de la pluralité de batteries, le nombre de batteries requises pour un travail dans une zone de demande (2), et entrent des informations météorologiques de zone de demande (302) indiquant une météo de la zone de demande (2) ; et
des moyens de traitement (113) qui retardent un temps de début du travail du plan de travail en réponse à une indication provenant des informations météorologiques de zone de demande (302) entrées par les moyens d'entrée (111) que la zone de demande (2) est impraticable,
dans lequel les moyens de traitement (113) créent le plan de fonctionnement (311) pour la pluralité de batteries (5) qui alloue le nombre requis de batteries à la zone de demande (2) à un temps sur la base du temps de début retardé du travail du plan de travail entré par les moyens d'entrée.

2. Appareil de traitement d'informations (10) selon la revendication 1,
dans lequel les moyens d'entrée (111) entrent en outre des informations météorologiques de nano-réseau (303) indiquant une météo dans un emplacement d'installation du nano-réseau (1) et des informations de nano-réseau concernant le nano-réseau (1), et
les moyens de traitement (113) déterminent le nano-réseau (1) pour charger la pluralité de batteries (5) sur la base des informations météorologiques de nano-réseau (303) et des informations de nano-réseau entrées par l'intermédiaire des moyens d'entrée (111).

3. Appareil de traitement d'informations (10) selon la revendication 2,
dans lequel les informations de nano-réseau incluent des informations de localisation indiquant une localisation du nano-réseau (1), et au moins une d'une capacité de production d'énergie de l'installation de production d'énergie (1a) ou d'une quantité de stockage d'énergie de l'installation de stockage d'électricité (1b), et
les moyens de traitement (113) déterminent le nano-réseau (1) pour charger la pluralité de batteries (5) sur la base d'au moins l'une des informations de localisation, d'une capacité de production d'énergie de l'installation de production d'énergie (1a), ou d'une quantité de stockage d'énergie de l'installation de stockage d'électricité (1b).

4. Appareil de traitement d'informations (10) selon la revendication 1,
dans lequel les moyens de traitement (113) créent un plan de distribution pour distribuer la pluralité de batteries (5) à la zone de demande (2) à partir du nano-réseau (1) conformément au plan de fonctionnement (311).

5. Appareil de traitement d'informations (10) selon la revendication 1,
dans lequel les moyens de traitement (113) corrigent ou déterminent le plan de travail conformément au plan de fonctionnement (311) et transmettent le plan de travail qui est corrigé ou déterminé à un dispositif de sortie de la zone de demande (2).

6. Appareil de traitement d'informations (10) selon la revendication 1, dans lequel
les moyens de traitement (113) allouent les batteries (5) dont le nombre satisfait la demande de travail du plan de travail et maintiennent le temps du plan de travail dans la zone de demande (2).

7. Appareil de traitement d'informations (10) selon la revendication 6,
dans lequel les moyens de traitement (113), par rapport à la pluralité de travaux programmés en même temps, attribuent les batteries (5) conformément à au moins un ordre préférentiel de :
(1) une charge de travail des travaux ;
(2) une date d'achèvement des travaux ; et
(3) une distance entre la zone de demande (2) et la batterie (5).

8. Appareil de traitement d'informations (10) selon la revendication 6,
dans lequel les moyens de traitement (113) retardent une heure de début du travail du plan de travail lorsque les batteries (5) dont le nombre satisfait la demande de travail du plan de travail ne sont pas attribuables.

9. Système d'énergie (100), comprenant :
un nano-réseau (1) qui inclut au moins un parmi une installation de production d'énergie (1a) ou une installation de stockage d'électricité (1b) ; et
un appareil de traitement d'informations (10) qui crée un plan de fonctionnement (311) pour une pluralité de batteries (5) chargées au niveau du nano-réseau (1), dans lequel
l'appareil de traitement d'informations (10) :
entre un plan de travail (304) incluant une demande de travail pour un nombre de batteries de la pluralité de batteries (5), le nombre de batteries nécessaires pour un travail dans une zone de demande (2), et entre des informations météorologiques de zone de demande (302) indiquant une météo de la zone de demande (2) ;
retarde une heure de début du travail du plan de travail entré en réponse à une indication provenant des informations météorologiques de zone de demande entrée (302) que la zone de demande (2) est impraticable ; et
crée le plan de fonctionnement (311) pour la pluralité de batteries (5) qui alloue le nombre requis de batteries à la zone de demande (2) à un temps sur la base du temps de début retardé du travail du plan de travail entré.

10. Procédé de création de plan de fonctionnement de batteries qui crée un plan de fonctionnement (311) pour une pluralité de batteries (5) chargées dans un nano-réseau (1) incluant au moins une installation de production d'énergie (1a) ou une installation de stockage d'électricité (1b), le procédé de création de plan de fonctionnement de batteries comprenant les étapes consistant à :
entrer un plan de travail (304) incluant une demande de travail pour un nombre de batteries de la pluralité de batteries (5), le nombre de batteries requises pour un travail dans une zone de demande (2) ;
entrer des informations météorologiques de zone de demande (302) indiquant une météo de la zone de demande (2) ;
retarder un temps de début du travail du plan de travail entré en réponse à une indication provenant des informations météorologiques de zone de demande d'entrée (302) que la zone de demande (2) est impraticable ; et
créer le plan de fonctionnement (311) pour la pluralité de batteries (5) qui alloue le nombre requis de batteries à la zone de demande (2) à un temps sur la base du temps de début retardé du travail du plan de travail entré (304).
